# EUROPEAN PATENT APPLICATION

(11) **EP 2 676 721 A1**
(43) Date of publication of application: **25.12.2013**
(21) Application number: 11858940.7
(22) Date of filing: 16.02.2011
(51) Int. Cl.: B01D 53/86

(54) **ELECTRICALLY HEATED CATALYST**

(71) Applicant: TOYOTA JIDOSHA KABUSHIKI KAISHA, Toyota-shi, Aichi-ken, 471-8571 (JP)
(72) Inventor: YOSHIOKA, Mamoru, Toyota-shi, Aichi 471-8571 (JP)
(74) Representative: Albutt, Anthony John
(86) International application number: PCT/JP2011/053245
(87) International publication number: WO 2012/111107

(57) **Abstract**

The electricity is suppressed from flowing through a case (5) of an electric heating catalyst (1). The electric heating catalyst (1) comprises a heat generating element (3) which generates heat by applying electricity; a case which accommodates the heat generating element (3); an inner tube (4) which is provided between the heat generating element (3) and the case (5); a mat (6) which is provided between the heat generating element (3) and the inner tube (4) and between the inner tube (4) and the case (5) and which insulates the electricity; and an electrode (7) which is connected to the heat generating element (3) and which supplies an electric power to the heat generating element (3); wherein the inner tube (4) protrudes from the mat (6) toward an upstream side and a downstream side in a flow direction of an exhaust gas; and a distance between the heat generating element (3) and the inner tube (41), which is provided on an upstream side from the electrode (7), is shorter than a distance between the heat generating element (3) and the inner tube (42) which is provided on a downstream side from the electrode (7).

## Description

### TECHNICAL FIELD

The present invention relates to an electric heating catalyst.

### BACKGROUND ART

A technique is known, in which a mat composed of an insulator is provided between a catalyst carrier which generates the heat by applying the electricity and a case which accommodates the catalyst carrier (see, for example, Patent Document 1). According to this mat, it is possible to suppress the electricity from flowing through the case when the electricity is applied to the catalyst carrier. However, when the particulate matter (PM) contained in an exhaust gas adheres to the mat, it is feared that the electricity may flow through the case by the aid of PM. On the other hand, water contained in an exhaust gas is sometimes condensed on a wall surface of an exhaust tube, for example, immediately after the startup of an internal combustion engine. If the water adheres to the mat, it is feared that the electricity may flow through the case by the aid of the water.

Another technique is known, in which an inner tube for insulating a metal casing from the heat is provided in the metal casing, and a diameter of the inner tube on the downstream side is made smaller than a diameter on the upstream side so that a honeycomb-shaped main body is supported at a portion at which the diameter of the inner tube is decreased (see, for example, Patent Document 2).

Still another technique is known, in which an inner tube is provided in a case, and any protrusion/recess is provided at a part of the inner tube (see, for example, Patent Document 3).

### PRECEDING TECHNICAL DOCUMENTS

### Patent Documents:

Patent Document 1: JP05-269387A;
Patent Document 2: JP3836134B2;
Patent Document 3: JP2004-509278W.

### SUMMARY OF THE INVENTION

### Task to Be Solved by the Invention:

The present invention has been made taking the foregoing problem into consideration, an object of which is to suppress the electricity from flowing through a case of an electric heating catalyst.

### Solution for the Task:

In order to achieve the object as described above, according to the present invention, there is provided an electric heating catalyst comprising:
a heat generating element which generates heat by applying electricity;
a case which accommodates the heat generating element;
an inner tube which is provided between the heat generating element and the case;
a mat which is provided between the heat generating element and the inner tube and between the inner tube and the case and which insulates the electricity; and
an electrode which is connected to the heat generating element and which supplies an electric power to the heat generating element, wherein:
   the inner tube protrudes from the mat toward an upstream side and a downstream side in a flow direction of an exhaust gas; and
   a distance between the heat generating element and the inner tube, which is provided on an upstream side from the electrode, is shorter than a distance between the heat generating element and the inner tube which is provided on a downstream side from the electrode.

The heat generating element (heat generator) may be a carrier for a catalyst (catalyst carrier), and the heat generating element can be also provided on the upstream side from the catalyst. The heat generating element generates the heat by applying the electricity to the heat generating element. Accordingly, it is possible to raise the temperature of the catalyst. The inner tube (inner pipe) divides the mat into the part disposed on the case side and the part disposed on the heat generating element side. Further, the inner tube is supported by the mat. Therefore, the inner tube is not brought in contact with the heat generating element and the case.

Water is contained in the exhaust gas of an internal combustion engine. Therefore, water is sometimes condensed, for example, on the case. The water flows along the inner surface of the case, and the water adheres to the mat. After that, the water is absorbed by the mat. In this arrangement, the inner tube protrudes from the mat toward the upstream side and the downstream side in the flow direction of the exhaust gas, and thus the water, which flows along the inner surface of the case, hardly flows toward the heat generating element beyond the inner tube. Therefore, it is possible to suppress the formation of any short circuit between the heat generating element and the case at the upstream side end portion and the downstream side end portion of the heat generating element. Further, the temperature tends to increase at the portions at which the inner tube protrudes from the mat. Therefore, even when the particulate matter contained in the exhaust gas adheres, the particulate matter is oxidized with ease. Accordingly, it is possible to suppress the short circuit formation which would be otherwise caused by the particulate matter adhered to the upstream side end portion and the downstream side end portion of the mat.

In the meantime, when the temperature of the exhaust gas is low, the particulate matter is deposited in some cases on the portion of the inner tube allowed to protrude from the mat. The particulate matter can be oxidized at a lower temperature when the higher oxygen concentration is provided. Therefore, when the steady operation is performed in the vicinity of the theoretical air-fuel ratio, the particulate matter is hardly oxidized, because the oxygen concentration is low and the exhaust gas temperature is low. On the other hand, even when the exhaust gas temperature is low, the particulate matter is easily oxidized when the operation is performed at the lean air-fuel ratio or when the fuel cut, in which the fuel supply to the internal combustion engine is stopped, is performed, for example, during the deceleration, because the oxygen concentration in the exhaust gas is high. However, when the internal combustion engine is operated at the lean air-fuel ratio, it is feared that the harmful substance contained in the exhaust gas may be increased. Therefore, it is difficult to greatly increase the oxygen concentration. When the fuel cut is performed during the deceleration, then the oxygen concentration can be greatly increased, but the temperature of the exhaust gas is lowered. Therefore, if the temperature of the inner tube is lowered, it is difficult to oxidize the particulate matter.

In relation thereto, the distance between the heat generating element and the inner tube is shortened on the upstream side from the electrode as compared with the downstream side from the electrode. When the distance between the heat generating element and the inner tube is shortened, the inner tube easily receives the heat from the heat generating element. Therefore, it is possible to contemplate the increase in the temperature of the inner tube during a period ranging from the startup of the internal combustion engine to the acceleration, and it is possible to suppress the decrease in the temperature of the inner tube during the deceleration. In this way, it is possible to suppress the decrease in the temperature of the inner tube on the upstream side from the electrode. Therefore, the particulate matter, which adheres to the inner tube, can be oxidized during the deceleration in which the oxygen concentration in the exhaust gas is high. Therefore, it is possible to suppress the electricity from flowing through the surface of the inner tube.

However, the shorter the distance between the heat generating element and the inner tube is, the thinner the mat is. Therefore, the surface pressure is changed more greatly with respect to the dispersion of the thickness of the mat. That is, it is more difficult to regulate the pressure between the inner tube and the heat generating element. If it is intended to reduce the dispersion of the thickness of the mat, it is necessary to more strictly manage the thickness of the mat during the production. Therefore, the cost is increased. Further, it is also necessary to more strictly manage the inner diameter of the inner tube and the outer diameter of the heat generating element equivalently, and hence the cost is increased. In relation thereto, when the distance between the heat generating element and the inner tube is shortened on only the upstream side from the electrode, and the distance between the heat generating element and the inner tube is made relatively long on the downstream side from the electrode, then it is possible to suppress the increase in the cost.

In this arrangement, as for the inner tube, the degree of decrease in the temperature is large during the deceleration on the upstream side as compared with the downstream side from the electrode. That is, the temperature tends to decrease with ease at the portion of the inner tube disposed on the upstream side on account of the flow of the exhaust gas having the low temperature during the deceleration. On the other hand, the portion of the inner tube, which is disposed on the downstream side, can receive the heat from the heat generating element, even when the exhaust gas allowed to inflow into the heat generating element has the low temperature. The heat generating element has the large thermal capacity, and hence the temperature is hardly lowered even when the exhaust gas having the low temperature passes therethrough. Therefore, the temperature of the inner tube is hardly lowered on the downstream side from the electrode. Therefore, it is possible to maintain the high temperature even when the distance between the inner tube and the heat generating element is long on the downstream side from the electrode.

In another aspect, in order to achieve the object as described above, according to the present invention, there is provided an electric heating catalyst comprising:
a heat generating element which generates heat by applying electricity;
a case which accommodates the heat generating element;
an inner tube which is provided between the heat generating element and the case;
a mat which is provided between the heat generating element and the inner tube and between the inner tube and the case and which insulates the electricity; and
an electrode which is connected to the heat generating element and which supplies an electric power to the heat generating element, wherein:
   the inner tube protrudes from the mat toward an upstream side and a downstream side in a flow direction of an exhaust gas; and
   a plate thickness of the inner tube, which is provided on an upstream side from the electrode, is thicker than a plate thickness of the inner tube which is provided on a downstream side from the electrode.

The thicker the plate thickness of the inner tube is, the larger the thermal capacity of the inner tube is. That is, when the thermal capacity of the inner tube is increased on the upstream side from the electrode, it is possible to suppress the decrease in the temperature of the inner tube, even when the temperature of the exhaust gas is lowered, for example, during the fuel cut. Accordingly, the temperature of the inner tube can be maintained to be high during the deceleration in which the oxygen concentration in the exhaust gas is high. Therefore, it is possible to oxidize the particulate matter adhered to the inner tube. Therefore, it is possible to suppress the electricity from flowing through the surface of the inner tube.

When the inner tube is thickened, then the mat is thinned, and hence the management is strict during the production. However, when only the part or portion of the inner tube, which is disposed on the upstream side from the electrode, is relatively thickened, it is possible to suppress the increase in the cost.

In the present invention, an outer diameter of the inner tube, which is provided at a portion at which the inner tube protrudes from the mat toward the upstream side in the flow direction of the exhaust gas, may be smaller than an outer diameter of the inner tube which is provided at a portion at which the mat is provided.

In this arrangement, if the distance between the inner tube and the case is short, it is feared that the electric discharge may be caused between the inner tube and the case. In relation thereto, when the diameter of the inner tube is made relatively short, it is possible to suppress the occurrence of the electric discharge between the inner tube and the case at the portion at which inner tube protrudes from the mat. Therefore, for example, even when the plate thickness of the inner tube is thickened, it is possible to suppress the distance between the inner tube and the case from being shortened.

In the present invention, a plate thickness of a certain part of the inner tube, which is provided at a portion at which the inner tube protrudes from the mat toward the upstream side in the flow direction of the exhaust gas, may be thinner than plate thicknesses of other parts of the inner tube which are provided on an upstream side and a downstream side from the certain part.

That is, it is also preferable that a part of the inner tube is thin-walled. In this arrangement, when the temperature of the exhaust gas is lowered, for example, during the fuel cut, the temperature is lowered most easily at the upstream end of the inner tube. That is, the heat tends to be deprived by the exhaust gas at the upstream end of the inner tube. If the temperature is lowered at the upstream end of the inner tube, the heat is transferred or moved from the downstream side of the inner tube. If this state is continued, the temperature of the entire inner tube is consequently lowered. In relation thereto, when the part of the inner tube is thin-walled, it is possible to suppress the transfer of the heat. That is, even when the temperature of the upstream end of the inner tube is lowered, it is possible to suppress the decrease in the temperature on the downstream side from the thin-walled portion. Further, only the part of the inner tube is thin-walled, and thus it is possible to suppress the decrease in the thermal capacity of the inner tube.

In the present invention, a member, which has a thermal conductivity lower than that of the mat, may be provided in the mat disposed between the inner tube and the case on the upstream side from the electrode.

Accordingly, it is possible to suppress the heat of the inner tube from being transferred to the case via the mat disposed on the outer side as compared with the inner tube. That is, it is possible to suppress the decrease in the temperature of the inner tube.

It is also allowable that the member, which has the thermal conductivity lower than that of the mat, is provided on an upstream end side of the mat disposed on the upstream side from the electrode, and the member is not provided on an electrode side. In this arrangement, the water, which is absorbed by the mat, is moved in the mat. However, the movement of water from the case side to the heat generating element side is blocked by the inner tube. Accordingly, it is possible to suppress the short circuit formation which would be otherwise caused by water. The water, which is absorbed by the mat, is evaporated by the heat of the exhaust gas and/or the heat of the heat generating element, and hence the water is removed when the time elapses.

However, if the water, which is absorbed by the mat, arrives at the electrode chamber, it is difficult to remove the water from the interior of the electrode chamber. If the water remains in the electrode chamber, it is feared that the short circuit formation may occur. In order to remove the water from the interior of the electrode chamber, it is effective to raise the temperature of the electrode chamber. However, if the member, which has the low thermal conductivity, is provided in the mat in the vicinity of the electrode chamber, it is difficult to raise the temperature of the electrode chamber. In relation thereto, when the member, which has the thermal conductivity lower than that of the mat, is not provided around the electrode chamber, it is possible to supply larger amounts of the heat generated in the heat generating element and the heat of the exhaust gas into the electrode chamber. Therefore, it is possible to promptly raise the temperature in the electrode chamber. Accordingly, it is possible to evaporate the water contained in the electrode chamber, and it is possible to quickly remove the water.

### EFFECT OF THE INVENTION

According to the present invention, it is possible to suppress the electricity from flowing through the case of the electric heating catalyst.

### BRIEF DESCRIPTION OF THE DRAWINGS

Fig. 1 shows a schematic arrangement of an electric heating catalyst according to a first embodiment.
Fig. 2 shows a schematic arrangement of an electric heating catalyst according to a second embodiment.
Fig. 3 shows a schematic arrangement of an electric heating catalyst according to a third embodiment.
Fig. 4 shows a schematic arrangement of an electric heating catalyst according to a fourth embodiment.
Fig. 5 shows a schematic arrangement of an electric heating catalyst according to a fifth embodiment.
Fig. 6 shows a schematic arrangement of an electric heating catalyst according to a sixth embodiment.

### MODE FOR CARRYING OUT THE INVENTION

Specified embodiments of the electric heating catalyst according to the present invention will be explained below on the basis of the drawings. The following embodiments can be appropriately combined with each other.

### First Embodiment

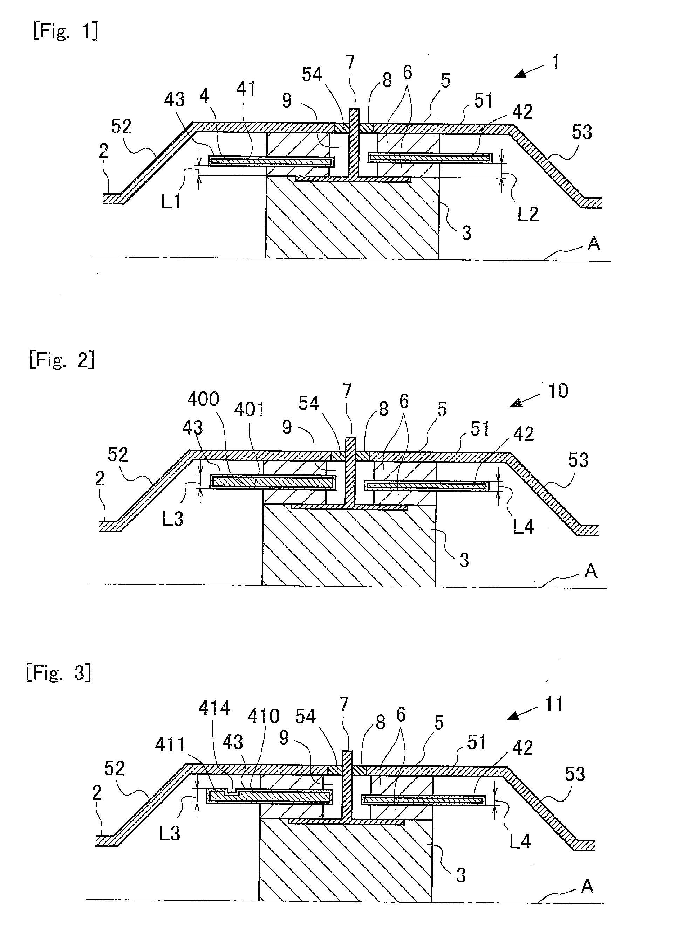

Fig. 1 shows a schematic arrangement of an electric heating catalyst 1 according to a first embodiment of the present invention. The electric heating catalyst 1 according to this embodiment is provided for an exhaust tube 2 of an internal combustion engine carried on a vehicle. The internal combustion engine may be either a diesel engine or a gasoline engine. Further, the electric heating catalyst 1 can be also used for a vehicle which adopts a hybrid system provided with an electric motor.

The electric heating catalyst 1 shown in Fig. 1 is depicted in a sectional view obtained by cutting the electric heating catalyst 1 in the vertical direction along the central axis A of the exhaust tube 2. The shape of the electric heating catalyst 1 is linearly symmetric with respect to the central axis A. Therefore, only an upper part is shown in Fig. 1.

The electric heating catalyst 1 according to this embodiment comprises a columnar or cylindrical catalyst carrier 3 which has the center of the central axis A. The catalyst carrier 3, an inner tube 4, and a case 5 are provided in this order as referred to from the side of the central axis A. A mat 6 is provided between the catalyst carrier 3 and the inner tube 4 and between the inner tube 4 and the case 5.

A material, which behaves as an electric resistor and which generates the heat by applying the electricity, is used for the catalyst carrier 3. For example, SiC is used as the material of the catalyst carrier 3. The catalyst carrier 3 has a plurality of passages which extend in the direction of the flow of the exhaust gas (i.e., in the direction of the central axis A) and which have a honeycomb-shaped form provided in the cross section perpendicular to the direction of the flow of the exhaust gas. The exhaust gas flows through the passages. The outer shape of the catalyst carrier 3 is, for example, a columnar shape provided about the center of the central axis A of the exhaust tube 2. The cross-sectional shape of the catalyst carrier 3, which is taken along the cross section perpendicular to the central axis A, may be, for example, elliptic. The central axis A is the common central axis of the exhaust tube 2, the catalyst carrier 3, the inner tube 4, and the case 5.

The catalyst is carried on the catalyst carrier 3. The catalyst may be exemplified, for example, by the oxidation catalyst, the three way catalyst, the absorption reduction type NOx catalyst, and the selective reduction type NOx catalyst. Two electrodes 7 are connected to the catalyst carrier 3. The electricity is applied to the catalyst carrier 3 by applying the voltage between the electrodes 7. The catalyst carrier 3 generates the heat in accordance with the electric resistance of the catalyst carrier 3. In this embodiment, the catalyst carrier 3 corresponds to the heat generating element according to the present invention. The heat generating element may be also provided on the upstream side from the catalyst. Accordingly, the exhaust gas is heated or warmed by the heat generating element. When the exhaust gas is allowed to pass through the catalyst, it is possible to raise the temperature of the catalyst.

An electrically insulating material is used for the mat 6. For example, a ceramic fiber, which contains a main component of alumina, is used therefor. The mat 6 is wound around the outer circumferential surface of the catalyst carrier 3 and the outer circumferential surface of the inner tube 4. The mat 6 covers the outer circumferential surface of the catalyst carrier 3 (surface parallel to the central axis A). Therefore, the mat 6 suppresses the electricity from flowing through the inner tube 4 and the case 5 when the electricity is applied to the catalyst carrier 3.

A stainless steel material is used for the material of the inner tube 4. The inner tube 4 is formed to have a tube-shaped form about the center of the central axis A. The length in the direction of the central axis A of the inner tube 4 is longer than that of the mat 6. Therefore, the inner tube 4 protrudes from the mat 6 to the upstream side and the downstream side. The inner diameter of the inner tube 4 is substantially the same as the outer diameter of the mat 6 provided when the outer circumference of the catalyst carrier 3 is covered with the mat 6. When the mat 6 and the catalyst carrier 3 are accommodated in the inner tube 4, the mat 6 is compressed. Therefore, the catalyst carrier 3 is fixed at the inside of the inner tube 4 by means of the repulsive force of the mat 6.

A metal is used as the material of the case 5. It is possible to use, for example, a stainless steel material. The case 5 is constructed to include an accommodating portion 51 which is constructed to include a curved surface parallel to the central axis A, and tapered portions 52, 53 which connect the accommodating portion 51 and the exhaust tube 2 on the upstream side and the downstream side from the accommodating portion 51. The catalyst carrier 3, the inner tube 4, and the mat 6 are accommodated at the inside of the accommodating portion 51. Each of the tapered portions 52, 53 has such a tapered shape that the cross-sectional area of the passage is decreased at positions separated farther from the accommodating portion 51. That is, the cross-sectional area is decreased on the more upstream side in relation to the tapered portion 52 disposed on the upstream side from the catalyst carrier 3. The cross-sectional area is decreased on the more downstream side in relation to the tapered portion 53 disposed on the downstream side from the catalyst carrier 3. The inner diameter of the accommodating portion 51 is substantially the same as the outer diameter of the mat 6 provided when the outer circumference of the inner tube 4 is covered with the mat 6. When the mat 6 and the inner tube 4 are accommodated in the accommodating portion 51, the mat 6 is compressed. Therefore, the inner tube 4 is fixed at the inside of the accommodating portion 51 by means of the repulsive force of the mat 6.

The two electrodes 7 are connected to the catalyst carrier 3. In order to allow the electrodes 7 to pass, a hole 54 is provided through the case 5. Further, in order to allow the electrodes 7 to pass, the inner tube 4 is divided into an upstream side inner tube 41 which is provided on the upstream side from the electrodes 7 and a downstream side inner tube 42 which is provided on the downstream side from the electrodes 7. The upstream side inner tube 41 and the downstream side inner tube 42 are separated from the electrodes 7 so that any electric discharge is not caused from the electrodes 7. The inner tube 4 is surrounded by an insulating layer 43 which insulates the electricity.

In this embodiment, the plate thickness of the upstream side inner tube 41 is the same as that of the downstream side inner tube 42. The inner diameter of the upstream side inner tube 41 is smaller than the inner diameter of the downstream side inner tube 42. That is, the distance L1 between the upstream side inner tube 41 and the catalyst carrier 3 is shorter than the distance L2 between the downstream side inner tube 42 and the catalyst carrier 3.

Further, the mat 6 is not provided around the electrodes 7 until the electrodes 7 are connected to the catalyst carrier 3. An insulating material 8, which supports the electrodes 7, is provided in the hole 54 which is bored through the case 5. The insulating material 8 is provided without any gap between the case 5 and the electrodes 7. In this way, an electrode chamber 9, which is a closed space, is formed around the electrodes 7 in the case 5.

In the electric heating catalyst 1 constructed as described above, the water, which is condensed on the upstream side from the catalyst carrier 3, flows along the inner walls of the exhaust tube 2 and the case 5, and the water adheres to the mat 6 in some cases. In this situation, the water flows along the inner wall of the accommodating portion 51. Therefore, the water adheres to the mat 6 disposed between the inner tube 4 and the accommodating portion 51. That is, the water is suppressed from entering the inside from the inner tube 4, because the inner tube 4 protrudes to the upstream side and the downstream side as compared with the mat 6. Accordingly, the short circuit formation is suppressed, which would be otherwise caused by the water between the case 5 and the catalyst carrier 3 at the upstream end and the downstream end of the mat 6.

If the particulate matter (hereinafter referred to as "PM"), which is contained in the exhaust gas, adheres to the mat 6 and/or the inner tube 4, it is feared that the short circuit may be formed by PM between the case 5 and the catalyst carrier 3. However, the inner tube 4 protrudes from the mat 6, and thus the heat of the exhaust gas is received to raise the temperature at the protruding portion. Therefore, PM, which adheres to the inner tube 4, can be oxidized and removed. Accordingly, the short circuit formation is suppressed, which would be otherwise caused by PM between the case 5 and the catalyst carrier 3.

In the meantime, in order to oxidize PM adhered to the surface of the inner tube 4, it is favorable that the surface temperature of the inner tube 4 is high when the oxygen concentration in the exhaust gas is high. The oxygen concentration in the exhaust gas becomes high when the fuel cut is performed during the deceleration. Therefore, if the surface temperature of the inner tube 4 is high in this situation, it is possible to effectively oxidize PM. However, the temperature of the exhaust gas is low during the fuel cut, and hence the surface temperature of the inner tube 4 tends to be lowered with ease.

In relation thereto, in this embodiment, the distance L1 between the upstream side inner tube 41 and the catalyst carrier 3 is shorter than the distance L2 between the downstream side inner tube 42 and the catalyst carrier 3. Accordingly, the upstream side inner tube 41 can receive a larger amount of the heat from the catalyst carrier 3. Therefore, it is possible to suppress the decrease in the temperature of the upstream side inner tube 41 during the fuel cut. For this reason, the high temperature can be maintained for a longer period of time during the fuel cut. Therefore, it is possible to lengthen or prolong the time in which PM can be oxidized. Accordingly, it is possible to suppress the deposition of PM on the inner tube 4. The distance L1 between the upstream side inner tube 41 and the catalyst carrier 3 and the distance L2 between the downstream side inner tube 42 and the catalyst carrier 3 may be determined experimentally as the distances at which PM can be oxidized.

Even if the temperature of the exhaust gas is lowered, when the exhaust gas passes through the catalyst carrier 3, then the temperature of the exhaust gas is raised by the catalyst carrier 3. Therefore, the amount of heat, which is deprived from the downstream side inner tube 42 by the exhaust gas, is smaller than the amount of heat which is deprived from the upstream side inner tube 41. Therefore, the distance L2 between the downstream side inner tube 42 and the catalyst carrier 3 can be made longer than the distance L1 between the upstream side inner tube 41 and the catalyst carrier 3. When the distance L1 between the upstream side inner tube 41 and the catalyst carrier 3 is shortened, then it is necessary to manage the design value more strictly, and hence the cost may be increased. However, it is possible to suppress the increase in the cost by relatively lengthening the distance L2 between the downstream side inner tube 42 and the catalyst carrier 3.

As explained above, according to this embodiment, the distance L1 between the upstream side inner tube 41 and the catalyst carrier 3 is made longer than the distance L2 between the downstream side inner tube 42 and the catalyst carrier 3. Accordingly, it is possible to suppress the decrease in the temperature of the upstream side inner tube 41 during the fuel cut while suppressing the increase in the cost. Accordingly, it is possible to facilitate the oxidation of PM adhered to the inner tube 4. Therefore, it is possible to suppress the electricity from flowing through the case 5.

### Second Embodiment

Fig. 2 shows a schematic arrangement of an electric heating catalyst 10 according to a second embodiment of the present invention. An explanation will be made about the points or features different from those of the electric heating catalyst 1 shown in the first embodiment. The members, which are the same as those of the electric heating catalyst 1 shown in the first embodiment, are designated by the same reference numerals, any explanation of which will be omitted.

As for an inner tube 400 shown in Fig. 2, the thickness differs between the upstream side and the downstream side from the electrodes 7. That is, a plate thickness L3 of an upstream side inner tube 401 provided on the upstream side from the electrodes 7 is thicker than a plate thickness L4 of a downstream side inner tube 42 provided on the downstream side from the electrodes 7.

In the electric heating catalyst 10 constructed as described above, the thermal capacity of the upstream side inner tube 401 is larger than that of the downstream side inner tube 42. Therefore, even if the temperature of the exhaust gas is lowered, for example, when the fuel cut is performed during the deceleration, then the decrease in the temperature of the upstream side inner tube 401 is suppressed. That is, it is possible to lengthen the time in which PM can be oxidized during the fuel cut. Accordingly, it is possible to suppress the deposition of PM on the inner tube 400.

Further, when the downstream side inner tube 42 is relatively thinned, it is possible to suppress the increase in the mass and the increase in the cost. The plate thickness L3 of the upstream side inner tube 401 and the plate thickness L4 of the downstream side inner tube 42 may be determined experimentally as the distances at which PM can be oxidized.

As explained above, according to this embodiment, it is possible to suppress the decrease in the temperature of the upstream side inner tube 401 during the fuel cut by thickening the plate thickness of the upstream side inner tube 401 as compared with the downstream side inner tube 42. Accordingly, it is possible to facilitate the oxidation of PM adhered to the inner tube 400. Therefore, it is possible to suppress the electricity from flowing through the case 5.

### Third Embodiment

Fig. 3 shows a schematic arrangement of an electric heating catalyst 11 according to a third embodiment of the present invention. An explanation will be made about the points or features different from those of the electric heating catalyst 10 shown in the second embodiment. The members, which are the same as those of the electric heating catalyst 10 shown in the second embodiment, are designated by the same reference numerals, any explanation of which will be omitted.

As for an inner tube 410 shown in Fig. 3, the thickness differs between the upstream side and the downstream side from the electrodes 7. That is, a plate thickness L3 of an upstream side inner tube 411 provided on the upstream side from the electrodes 7 is thicker than a plate thickness L4 of a downstream side inner tube 42 provided on the downstream side from the electrodes 7. Further, a thin-walled portion 414, in which the plate thickness of the upstream side inner tube 411 is thinned, is provided at a portion of the upstream side inner tube 411 allowed to protrude from the mat 6.

The thin-walled portion 414 is formed by recessing a part of the outer circumferential surface side of the upstream side inner tube 411 toward the central axis A. The thin-walled portion 414 is provided on the downstream side from the upstream end of the upstream side inner tube 411. Therefore, the plate thickness is thickened on the upstream side and the downstream side from the thin-walled portion 414 as compared with the thin-walled portion 414. The thin-walled portion 414 is formed to make a round around the upstream side inner tube 411 about the center of the central axis A.

In the electric heating catalyst 11 constructed as described above, the thermal capacity of the upstream side inner tube 411 is larger than that of the downstream side inner tube 42. Therefore, the decrease in the temperature of the upstream side inner tube 411 is suppressed even if the temperature of the exhaust gas is lowered, for example, when the fuel cut is performed during the deceleration. When the temperature of the exhaust gas is lowered, then the degree of decrease in the temperature is larger at positions disposed on the more upstream side of the upstream side inner tube 411, and the degree of decrease in the temperature is smaller at positions portion 414. Even if PM is deposited on the inner tube 410 on the upstream side from the thin-walled portion 414, when PM does not adhere to the inner tube 410 on the downstream side from the thin-walled portion 414, then it is possible to suppress the electricity from flowing through the surface of the inner tube 410.

Further, the downstream side inner tube 42 is relatively thinned, and any thin-walled portion is not provided for the downstream side inner tube 42. Accordingly, it is possible to suppress the increase in the mass and the increase in the cost.

In the electric heating catalyst 11 shown in Fig. 3, the thin-walled portion 414 is formed by recessing a part of the outer circumferential surface side of the upstream side inner tube 411. However, a thin-walled portion may be formed by recessing a part of the inner circumferential surface side of the upstream side inner tube 411. Thin-walled portions may be formed by recessing parts of the outer circumferential surface side and the inner circumferential surface side of the upstream side inner tube 411. A plurality of thin-walled portions may be provided. It is also allowable that the thin-walled portion does not make a round around the upstream side inner tube 411. The position and the shape of the thin-walled portion 414 can be also determined experimentally as the position and the shape with which it is possible to oxidize PM adhered to the inner tube 410 disposed on the downstream side from the thin-walled portion 414.

As explained above, according to this embodiment, it is possible to suppress the decrease in the temperature of the upstream side inner tube 411 during the fuel cut by thickening the plate thickness of the upstream side inner tube 411 as compared with the downstream side inner tube 42. Further, owing to the provision of the thin-walled portion 414, it is possible to suppress the decrease in the temperature of the entire upstream side inner tube 411 during the fuel cut. Accordingly, it is possible to facilitate the oxidation of PM adhered to the inner tube 410. Therefore, it is possible to suppress the electricity from flowing through the case 5.

### Fourth Embodiment

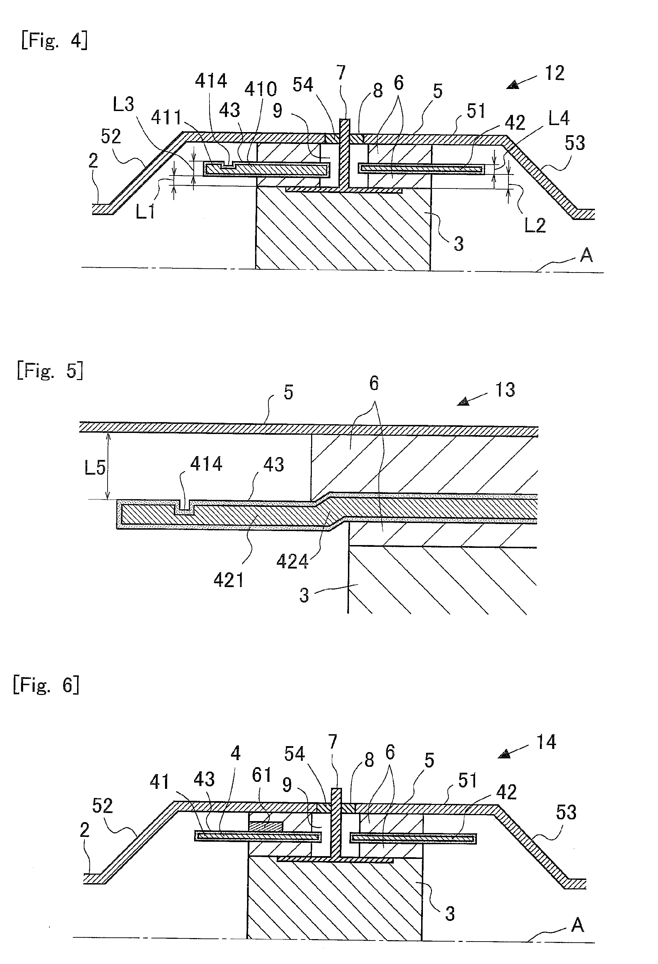

Fig. 4 shows a schematic arrangement of an electric heating catalyst 12 according to a fourth embodiment of the present invention. An explanation will be made about the points or features different from those of the electric heating catalysts 1, 10, 11 shown in the first to third embodiments. The members, which are the same as those of the electric heating catalysts 1, 10, 11 shown in the first to third embodiments, are designated by the same reference numerals, any explanation of which will be omitted.

In an inner tube 410 shown in Fig. 4, the thickness differs between the upstream side and the downstream side from the electrodes 7. That is, a plate thickness L3 of an upstream side inner tube 411 provided on the upstream side from the electrodes 7 is thicker than a plate thickness L4 of a downstream side inner tube 42 provided on the downstream side from the electrodes 7. Further, a thin-walled portion 414, which has a thinned plate thickness of the upstream side inner tube 411, is provided at a portion of the upstream side inner tube 411 allowed to protrude from the mat 6. A distance L1 between the upstream side inner tube 411 and the catalyst carrier 3 is shorter than a distance L2 between the downstream side inner tube 42 and the catalyst carrier 3.

In the electric heating catalyst 12 constructed as described above, the thermal capacity of the upstream side inner tube 411 is larger than that of the downstream side inner tube 42. Therefore, the decrease in the temperature of the upstream side inner tube 411 is suppressed even if the temperature of the exhaust gas is lowered, for example, when the fuel cut is performed during the deceleration. Further, owing to the provision of the thin-walled portion 414, the cross-sectional area of the upstream side inner tube 411 can be decreased at the thin-walled portion 414, and hence it is possible to restrict the transfer of the heat. That is, it is possible to suppress the decrease in the temperature of the upstream side inner tube 411 on the downstream side from the thin-walled portion 414.

Further, the distance L1 between the upstream side inner tube 411 and the catalyst carrier 3 is shorter than the distance L2 between the downstream side inner tube 42 and the catalyst carrier 3. Accordingly, it is possible to suppress the decrease in the temperature of the upstream side inner tube 411 during the fuel cut.

According to the foregoing features, it is possible to lengthen the time in which PM can be oxidized during the fuel cut. Accordingly, it is possible to suppress the deposition of PM on the inner tube 410. Further, the plate thickness of the downstream side inner tube 42 is made relatively thin, the distance L2 between the downstream side inner tube 42 and the catalyst carrier 3 is made relatively long, and any thin-walled portion is not provided for the downstream side inner tube 42. Accordingly, it is possible to suppress the increase in the cost.

### Fifth Embodiment

Fig. 5 shows a schematic arrangement of an electric heating catalyst 13 according to a fifth embodiment of the present invention. An explanation will be made about the points or features different from those of the electric heating catalyst 11 shown in the third embodiment. The members, which are the same as those of the electric heating catalyst 11 shown in the third embodiment, are designated by the same reference numerals, any explanation of which will be omitted.

In this context, if the plate thickness of the upstream side inner tube 411 is thickened as in the electric heating catalyst 11 shown in the third embodiment, it is feared that the distance between the upstream side inner tube 411 and the case 5 may be shortened. If the distance is shortened, it is feared that the electric discharge may be caused between the upstream side inner tube 411 and the case 5.

In relation thereto, in the electric heating catalyst 13 shown in Fig. 5, the diameter of an upstream side inner tube 421 differs between the upstream side and the downstream side from the upstream end of the mat 6. That is, the diameter of the upstream side inner tube 421 is increased at positions disposed on the more downstream side at a tapered portion 424 provided for the upstream side inner tube 421. Accordingly, the distance L5 between the upstream side inner tube 421 and the case 5 is lengthened on the upstream side from the upstream end of the mat 6 as compared with the downstream side. Accordingly, even when the plate thickness of the upstream side inner tube 421 is thickened, it is possible to suppress the occurrence of the electric discharge between the upstream side inner tube 421 and the case 5. Even in the case of the electric heating catalysts shown in the other embodiments, the electric discharge can be suppressed by providing the tapered portion 424.

### Sixth Embodiment

Fig. 6 shows a schematic arrangement of an electric heating catalyst 14 according to a sixth embodiment of the present invention. An explanation will be made about the points or features different from those of the electric heating catalyst 1 shown in the first embodiment. The members, which are the same as those of the electric heating catalyst 1 shown in the first embodiment, are designated by the same reference numerals, any explanation of which will be omitted.

In the electric heating catalyst 14 shown in Fig. 6, the diameter of the upstream side inner tube 41 is the same as the diameter of the downstream side inner tube 42. However, the diameters may be different from each other. Further, the plate thickness of the upstream side inner tube 41 is the same as the plate thickness of the downstream side inner tube 42. However, the plate thicknesses may be different from each other.

A thermal insulation portion 61 is provided on the upstream end side of the mat 6. The thermal insulation portion 61 is not provided around the electrode chamber 9. The thermal insulation portion 61 is not provided on the downstream side from the electrodes 7 as well.

The thermal insulation portion 61 is formed to have a cylindrical shape about the center of the central axis A, which is provided along the outer circumferential surface of the upstream side inner tube 41. The mat 6 is provided between the thermal insulation portion 61 and the case 5. A material, which has the thermal insulation performance higher than that of the mat 6, is adopted for the thermal insulation portion 61. That is, the thermal conductivity of the thermal insulation portion 61 is lower than that of the mat 6.

In the electric heating catalyst 14 constructed as described above, it is possible to suppress the transfer of the heat of the inner tube 4 to the case 5 via the mat 6, by means of the thermal insulation portion 61. The thermal insulation portion 61 is not provided around the electrode chamber 9. Therefore, the heat can be supplied from the inner tube 4 to the electrode chamber 9. Accordingly, it is possible to facilitate the evaporation of water in the electrode chamber 9.

The temperature of the downstream side inner tube 42 is hardly lowered. Therefore, the thermal insulation portion 61 is not provided on the downstream side from the electrodes 7. Accordingly, it is possible to suppress the increase in the cost.

The thermal insulation portion 61 can be also provided for the electric heating catalysts 1, 10, 11, 12, 13 according to the first to fifth embodiments described above.

### PARTS LIST

1: electric heating catalyst, 2: exhaust tube, 3: catalyst carrier, 4: inner tube, 5: case, 6: mat, 7: electrode, 8: insulating material, 9: electrode chamber, 41: upstream side inner tube, 42: downstream side inner tube, 43: insulating layer.

## Claims

1. An electric heating catalyst comprising:
a heat generating element which generates heat by applying electricity;
a case which accommodates the heat generating element;
an inner tube which is provided between the heat generating element and the case;
a mat which is provided between the heat generating element and the inner tube and between the inner tube and the case and which insulates the electricity; and
an electrode which is connected to the heat generating element and which supplies an electric power to the heat generating element, wherein:
the inner tube protrudes from the mat toward an upstream side and a downstream side in a flow direction of an exhaust gas; and
a distance between the heat generating element and the inner tube, which is provided on an upstream side from the electrode, is shorter than a distance between the heat generating element and the inner tube which is provided on a downstream side from the electrode.

2. An electric heating catalyst comprising:
a heat generating element which generates heat by applying electricity;
a case which accommodates the heat generating element;
an inner tube which is provided between the heat generating element and the case;
a mat which is provided between the heat generating element and the inner tube and between the inner tube and the case and which insulates the electricity; and
an electrode which is connected to the heat generating element and which supplies an electric power to the heat generating element, wherein:
the inner tube protrudes from the mat toward an upstream side and a downstream side in a flow direction of an exhaust gas; and
a plate thickness of the inner tube, which is provided on an upstream side from the electrode, is thicker than a plate thickness of the inner tube which is provided on a downstream side from the electrode.

3. The electric heating catalyst according to claim 1 or 2, wherein an outer diameter of the inner tube, which is provided at a portion at which the inner tube protrudes from the mat toward the upstream side in the flow direction of the exhaust gas, is smaller than an outer diameter of the inner tube which is provided at a portion at which the mat is provided.

4. The electric heating catalyst according to any one of claims 1 to 3, wherein a plate thickness of a certain part of the inner tube, which is provided at a portion at which the inner tube protrudes from the mat toward the upstream side in the flow direction of the exhaust gas, is thinner than plate thicknesses of other parts of the inner tube which are provided on an upstream side and a downstream side from the certain part.

5. The electric heating catalyst according to any one of claims 1 to 4, wherein a member, which has a thermal conductivity lower than that of the mat, is provided in the mat disposed between the inner tube and the case on the upstream side from the electrode.
